# EUROPEAN PATENT APPLICATION

(11) **EP 4 762 893 A1**
(43) Date of publication of application: **24.06.2026**
(21) Application number: 24307183.4
(22) Date of filing: 19.12.2024
(51) Int. Cl.: A01B 59/042, B60D 1/00

(54) **ATTACHMENT ASSEMBLY, WORKING ASSEMBLY AND WORK VEHICLE**

(71) Applicant: Kubota Corporation, Osaka-shi, Osaka 556-8601 (JP)
(72) Inventor: ALIX, Maëlle, 60800 Crépy-en-Valois, (FR); ANDREAS, Jean-Baptiste, 60800 Crépy-en-Valois (FR)
(74) Representative: Cabinet Beau de Loménie

(57) **Abstract**

An attachment assembly (5) for attachment of a drawbar (7) to a work vehicle (1), the attachment assembly (5) comprising:
- a mounting plate (11) configured to be fixed to a bottom side (6) of the work vehicle (1),
- a spacing part (12),
- a support plate (13), the spacing part (12) joining the mounting plate (11) and the support plate (13) so as to define a receiving space (22) between the mounting plate (11) and the support plate (13) for receiving a front end (9) of the drawbar (7),
- a pin (37) arranged in the receiving space (22), said pin (37) being configured to pass through an anchoring hole (10, 27) of the front end (9) of the drawbar (7) so as to attach said front end (9) of the drawbar (7) to the attachment assembly (5) in the receiving space (22),
wherein the support plate (13) is configured to extend, along a longitudinal direction and forwardly from the pin, further than a distance (26) between the anchoring hole (10, 27) and a front face (23) of the drawbar (7).

## Description

### 1. Field of the invention

The present disclosure relates to the field of work vehicles such as tractors and more particularly to an attachment assembly of such a work vehicle for attachment of a drawbar.

### 2. Description of Related Art

Work vehicles such as agricultural tractors are commonly used to tow a working device such as a sowing spraying device for spraying seeds, a cutting device for performing grass, a fertilizer spraying device for spraying fertilizer, a transplanting device for planting seedlings, an irrigation device for irrigating or any other working device used in agricultural fields. A drawbar is used to attach the working device to an attachment assembly of the tractor. This attachment assembly is arranged on the rear bottom side of the tractor and comprises a receiving space for receiving a front end of the drawbar. This attachment assembly comprises a pin arranged in the receiving space, this pin being configured to pass through an anchoring hole of the front end of the drawbar in order to attach said front end of the drawbar to the attachment assembly while authorizing rotation of said drawbar around the pin.

As the attachment assembly is arranged on the bottom side of the tractor, the pin and the drawbar are near the ground. When the tractor moves in the fields, both the drawbar and the pin can be in contact with crops and soil or other dirt which could lead the pin of the attachment assembly and the front end of the drawbar to be clogged by said crops, soil and other dirt. This could block the rotation of the drawbar around the pin and lead to difficulties to remove the drawbar, for example for changing the working device used with the tractor.

Thus, there is a need for protecting the drawbar and the pin efficiently with a device which is easy to manufacture and install on the work vehicle.

### SUMMARY

The object of the present invention is to at least substantially remedy the above-mentioned drawbacks.

An idea of the invention is to protect the drawbar and the pin of the attachment assembly from crops, soil and other dirt. A further idea of the invention is to provide such protection without blocking the rotation of the drawbar around the pin. Another idea of the invention is to provide the above-mentioned advantages with a device which is easy to manufacture and to install on the work vehicle.

In this respect, the present disclosure relates to an attachment assembly for attachment of a drawbar to a work vehicle, the attachment assembly comprising:
- a mounting plate configured to be fixed to a bottom side of the work vehicle,
- a spacing part,
- a support plate, the spacing part joining the mounting plate and the support plate so as to define a receiving space between the mounting plate and the support plate for receiving a front end of the drawbar,
- a pin arranged in the receiving space, said pin being configured to pass through an anchoring hole of the front end of the drawbar so as to attach said front end of the drawbar to the attachment assembly in the receiving space,
wherein the support plate is configured to extend, along a longitudinal direction and forwardly from the pin, further than a distance between the anchoring hole and a front face of the drawbar.

In the present description, regarding directions relative to the work vehicle, "front side" refers to the side facing the forward direction of the work vehicle while "rear side" refers to the side behind the work vehicle. The "upper side" refers to the side facing away from the ground while the "bottom side" refers to side facing the ground. Thus, an element extending "upwardly" extends away from the ground and an element extending "forwardly" extends in the forward direction of the work vehicle. Moreover, the longitudinal direction refers to a direction from the rear side to the front side while the width direction refers to a direction perpendicular to said longitudinal direction.

Such an attachment assembly protects the drawbar from contact with crops and limits the accumulation of soil or other dirt. Especially, by extending forwardly further than a distance between the anchoring hole and the front face of the drawbar, the support plate ensures protection of the drawbar along the whole front end of said drawbar. Indeed, crops, soil and other dirt from the ground are deflected by the support plate prior to any contact with the drawbar or the pin. Thus, the drawbar is protected from clogging or even damage linked to crops or other external elements and remains movable in rotation around the pin.

Moreover, such a protection of the drawbar is easy to obtain thanks to the assembly attachment as the support plate both supports the front end of the drawbar and protects it. In other words, the attachment assembly according to the invention does not require supplementary element for providing the protection of the drawbar. Such an attachment assembly is easy to install on the work vehicle as it just needs to fix the mounting plate to the bottom side of the work vehicle to ensure both the attachment for the drawbar and the protection of said drawbar.

According to embodiments of the invention, the attachment assembly can have the following features, alone or in combination.

According to an embodiment, the support plate extends forwardly further than the mounting plate. Preferably the support plate is longer than the mounting plate.

The support plate and/or the mounting plate can have any adapted shape, for example a square shape, a rectangular shape or any other shape.

According to an embodiment, the mounting plate is larger, along a width direction, than the support plate.

According to an embodiment, the mounting plate comprises a first hole and the support plate comprises a second hole, said first hole and second hole being circular with their centers aligned along the upward direction, the pin passing through said first hole and said second hole. However, the first hole and the second hole can have any other shape, as an example a rectangular shape, allowing the pin to pass through both the first and second holes in order to be mounted in the receiving space between the mounting plate and the support plate.

According to an embodiment, the pin is fixed in the receiving space. As an example, the pin is mounted in the first and second holes with two ends of said pin extending outside of the receiving space and cooperating with a locking mean such as nuts, a rod passing through said ends of the pin or any other locking mechanism.

According to an embodiment, the attachment assembly further comprises a front plate, said front plate extending upwardly from a front end of the support plate.

Such a front plate further protects the drawbar and the pin in the receiving space.

Preferably, this front plate extends forwardly from the front end of the support plate. In other words, the front plate is preferably inclined compared to the support plate, said inclination being both in forward and upward direction. Such a front plate can more efficiently protect the drawbar and the pin as it lies down the crops when the work vehicle moves forward.

The front plate and the support plate may be joined according to various embodiments. The front plate and the support plate may be a single piece manufactured with the desired shape or a plurality of pieces joined together. In an embodiment, the front plate and the support plate are formed by bending a single plate, a first part of said single plate forming the support plate and a second part of said single plate forming the front plate. In an embodiment, the front plate and the support plate are two plates welded together.

According to an embodiment, the front plate is at least as large, i.e. along the width direction, as the front end of the support plate.

According to an embodiment, the spacing part comprises a first spacing plate and a second spacing plate, the first spacing plate joining a first side of the mounting plate to a corresponding first side of the support plate, the second spacing plate joining a second side of the mounting plate to a corresponding second side of the support plate, the receiving space being defined by the mounting plate, the support plate, the first spacing plate and the second spacing plate.

Such an attachment assembly is easy to manufacture as it requires only simple components like plates joined together. These plates can be joined thanks to any known means such as by welding, screw and nuts, etc.

According to an embodiment, the mounting plate comprises fixing holes.

According to an embodiment, the spacing part is arranged, along a width direction, between said fixing holes. Such a spacing part allows an easy access to the fixing holes. According to an embodiment, the fixing holes are arranged, along a width direction, between the spacing plates.

According to an embodiment, the spacing part is arranged, along the longitudinal direction, between said fixing holes. In other words, according to an embodiment, the spacing part is arranged longitudinally between forward fixing holes and backward fixing hole of the mounting plate. According to an embodiment, the spacing part is arranged, both along the longitudinal direction and the width direction, between said fixing holes.

According to an embodiment, the support plate comprises passage holes. Said passage holes are arranged in line, along the upward direction, with the fixing holes. Such passage holes provide an easier access to the fixing holes.

Preferably, the mounting plate comprises four fixing holes. More preferably, said fixing holes are arranged in respective corners of the mounting plate.

According to an embodiment, the support plate comprises a main portion and a front portion, said front portion forming the front end of the support plate, the front portion being larger, in a width direction, than the main portion. This main portion of the support plate may be a portion of the support plate arranged, in the width direction, between the spacing plates.

This front portion ensures a larger surface to protect the drawbar and the pin from contact with crops and limits the accumulation of soil or other dirt.

According to an embodiment, the first spacing plate and the second spacing plate are arranged longitudinally between forward fixing holes and backward fixing hole of the mounting plate.

According to an embodiment, the first spacing plate and/or the second spacing plate extend forwardly beyond the mounting plate. Preferably, at least one of the first spacing plate and the second spacing plate is configured to extend forwardly from the pin further than the distance between the anchoring hole and the front face of the drawbar.

Preferably a front end of at least one of the first spacing plate and the second spacing plate joins the front end of the support plate.

Such spacing plates ensure better protection of the drawbar and the pin as it provides a lateral protection against crops, soil and other dirt. Indeed, in this embodiment, further to the protection of the drawbar from the bottom thanks to the support plate, and eventually from the front thanks to the front plate, the front end of the drawbar is laterally surrounded by the spacing plates and therefore laterally protected thanks to the spacing plates.

According to an embodiment, at least one of the first spacing plate and the second spacing plate extends longitudinally from the front end of the support plate to a rear end of the support plate.

Preferably, the front end of at least one of the first spacing plate and the second spacing plate joins the front plate. This ensures an even better protection of the drawbar and the pin.

The invention also provides a working assembly comprising an attachment assembly as above and a drawbar.

The invention also provides a work vehicle comprising an attachment assembly as above.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is schematic view of a tractor showing an attachment assembly according to a first embodiment of the invention;
- FIG.2 is a detailed view of figure 1 showing the attachment assembly and the drawbar attached to said attachment assembly;
- FIG. 3 is schematic view of an example of drawbar to be used with the attachment assembly of figure 1;
- FIG. 4 to 6 are detailed views with different orientation angles of the attachment assembly of figure 1;
- FIG. 7 and 8 are detailed views with different orientation angles of the attachment assembly according to second embodiment;
- FIG. 9 and 10 are detailed views with different orientation angles of the attachment assembly according to a third embodiment,
- FIG. 11 and 12 are detailed views with different orientation angles of the attachment assembly according to a fourth embodiment.

### DETAILED DESCRIPTION OF EMBODIMENTS

Hereinafter, embodiments of the present invention will be described with reference to the drawings.

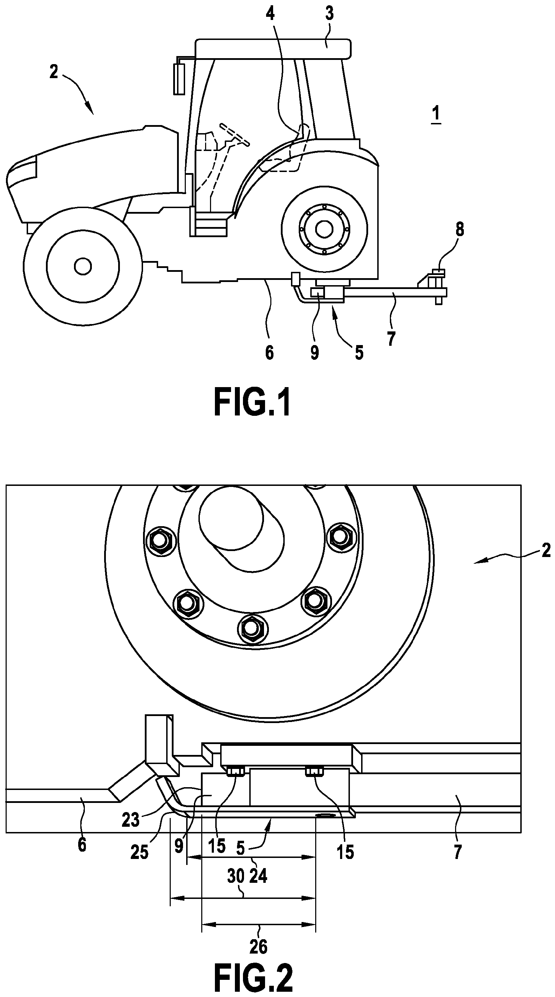

FIG. 1 shows a tractor 1 which is an example of work vehicle. The work vehicle will be described by taking the tractor 1 as an example, but the work vehicle is not limited to a tractor and may be any other work vehicle which comprises an attachment assembly in its bottom rear part to attach a working device to the work vehicle.

As shown in FIG. 1, the tractor 1 includes a vehicle body 2 having wheels, a motor and a transmission. The motor is a diesel engine, an electric motor, or the like. Transmission provides the propulsive force from the motor to the wheels (not shown) to allow movement of the work vehicle 1. A cabin 3 is provided in the vehicle body 2, and a driver's seat 4 is provided in the cabin 3.

An attachment assembly 5 is provided at the bottom rear portion of the vehicle body 2. The attachment assembly 5 aims to connect a working device (not shown) and the vehicle body 2. By connecting a working device to the attachment assembly 5, said working device can be towed by the tractor 1. The working device can be any kind of devices used in agricultural fields. These working devices include a tilling device for cultivating, a fertilizer spraying device for spraying fertilizer, a transplanting device for planting seedlings, an irrigation device for irrigating, a pesticide spraying device for spraying pesticides, a sowing spraying device for spraying seeds, and cutting of grass and the like, a cutting device for performing grass, a spreading device for spreading grass, a grass collecting device for collecting grass, a molding device for molding grass, a composite device for performing a plurality of operations, and the like.

As better shown in figure 2, the attachment assembly 5 is fixed to a bottom side 6 of the vehicle body 2. The working device is attached to the attachment assembly 5 thanks to a drawbar 7.

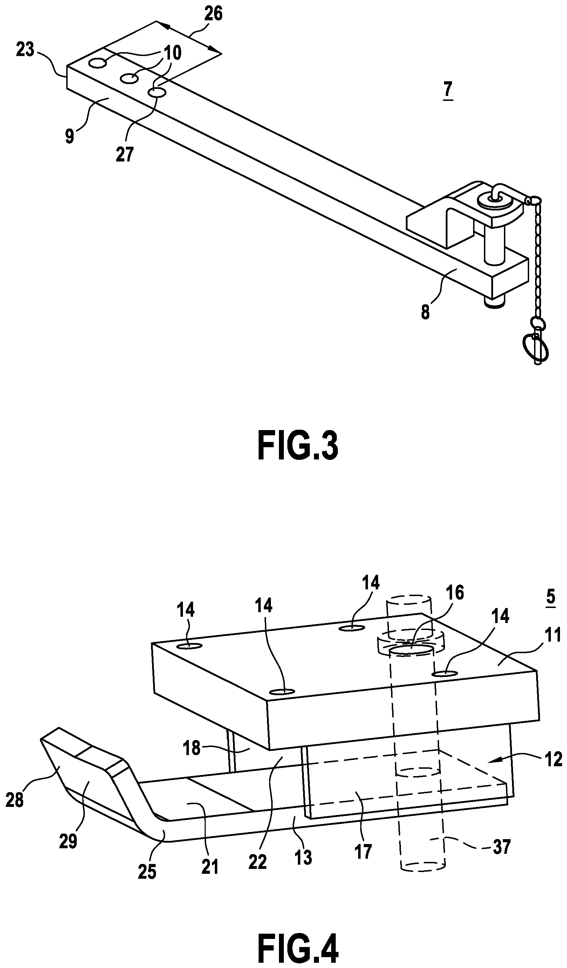

Figure 3 shows an example of drawbar 7. Such a drawbar 7 comprises a first end 8, typically a rear end 8, configured to be connected to the working device and a second end 9, typically a front end 9, configured to be inserted and attached to the attachment assembly 5.

The front end 9 of the drawbar 7 comprises anchoring holes 10 configured to receive a pin 37 (see figure 4) of the attachment assembly 5. These anchoring holes 10 have a circular shape to allow rotation of the drawbar 7 around a rotation axis defined by the pin 37 of the attachment assembly 5.

In the embodiment shown on figure 3, the front end 9 comprises three anchoring holes 10 but the drawbar 7 could have a single or a plurality of anchoring holes 10. A plurality of anchoring holes 10 on the front end 9 drawbar 7 allows insertion and attachment of the drawbar 7 to the attachment assembly 5 with different positions, as an example to adapt the drawbar 7 to different working devices or tractor.

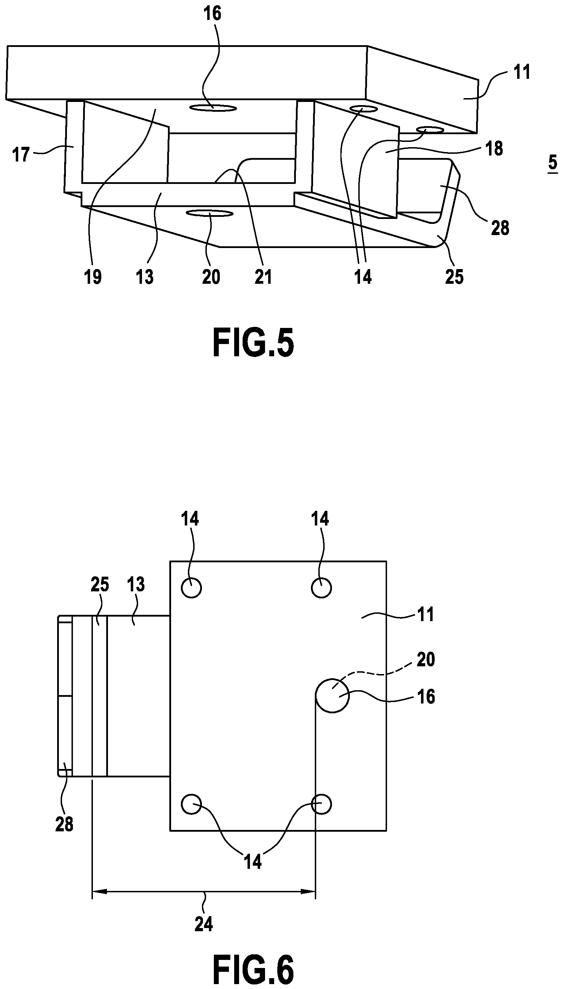

As shown on figures 4 to 6 which show the attachment assembly 5 of figure 1 in details, the attachment assembly 5 comprises a mounting plate 11, a spacing part 12 and a support plate 13.

In this embodiment, the mounting plate 11 has a rectangular shape. The mounting plate 11 comprises fixing holes 14, four fixing holes 14 each one being arranged in a respective corner of the mounting plate 11 in the embodiment shown on figures 4 to 6. These fixing holes 14 are used to fix the mounting plate 11 to the bottom side 10 of the tractor 1 for example by screws (not shown) and nuts 15 (see figure 2) or any other fixing means.

The mounting plate 11 comprises a central hole 16 configured to receive the pin 37 of the attachment assembly 5.

The spacing part 12 comprises a first spacing plate 17 and a second spacing plate 18. These spacing plates 17 and 18 have a rectangular shape in the embodiment shown on figures 4 to 6. The spacing plates 17 and 18 extend perpendicularly from a bottom face 19 of the mounting plate 11, said bottom face 19 being a face of the mounting plate 11 opposed to the bottom side 6 of the tractor 1, i.e. facing the ground. In other words, the spacing plates 17 and 18 are parallel and arranged below the mounting plate 11.

The spacing plates 17 and 18 are arranged, along the width direction, between the fixing holes 14 to allow an easier access to the fixing means cooperating with the fixing holes 14. However, the space between the spacing plates 17 and 18, along said width direction, is as large as possible to allow the drawbar 7 to rotate around the pin 37 without abutting against said spacing plates 17 or 18.

The support plate 13 is fixed to the spacing part 12. More particularly, the support plate 13 is fixed to an end of the spacing part 12 opposed to the mounting plate 11, typically to a corresponding end of the spacing plates 17 and 18 opposed to the mounting plate 11.

The support plate 13 comprises a central hole 20 configured to receive the pin 37 of the attachment assembly 5. The central hole 16 of the mounting plate 11 and the central hole 20 of the support plate 13 are circular and aligned in order to receive the pin of the attachment assembly 5.

The bottom face 19 of the mounting plate 11, the spacing plates 17 and 18 and an upper face 21 of the support plate 13 define together a receiving space 22 for the front end 9 of the drawbar 7. The front end 9 of the drawbar 7 is inserted in this receiving space 22 and the anchoring hole 10 is aligned with both the central hole 16 of the mounting plate 11 and the central hole 20 of the support plate 13. Then, the pin 37 is inserted in the central holes 16 and 20 and the anchoring hole 10, maintaining the front end 9 of the drawbar 7 in the receiving space 22. The pin 37 is maintained in position with any blocking means for instance a nut, blocking rods inserted in blocking holes of the pin 37 or any other locking mechanism. The circular shape of both the pin 37 and the anchoring hole 10 allows rotation of the drawbar 7 around an axis defined by the pin 37.

In order to protect the pin 37 and the drawbar 7, the support plate 13 extends forwardly, along the longitudinal direction, beyond a front face 23 of the drawbar 7 (see figure 3). Thus, a distance 24 between a front end 25 of the support plate 13 and the central hole 20 of the support plate 13 is at least equal, and preferably greater, than a maximum distance 26 between the front face 23 of the drawbar 7 and the anchoring holes 10 of the drawbar 7. This maximum distance 26 is defined by the front face 23 of the drawbar 7 and a furthest anchoring hole 27 of the anchoring holes 10 of the drawbar 7. Moreover, the distance 24 is defined from the most forward point of the front end 25 of the support plate 13 to the closest point of the central hole 20 of the support plate 11, i.e. the front side of said central hole 20. Similarly, the maximum distance 26 is defined between the most forward point of the front face 23 of the drawbar 7 and the closest point of the furthest anchoring hole 27, i.e. the front side of said furthest anchoring hole 27.

Such a support plate 13 extending forwardly beyond the front end 9 of the drawbar 7 protects said drawbar 7 and the pin 37 from crops, soil and other dirt when the tractor 1 moves forward.

In order to further improve the drawbar 7 and pin 37 protection, the attachment assembly 5 further comprises a front plate 28. This front plate 28 extends upwardly and forwardly from the font end 25 of the support plate 13. The front plate 28 protects the receiving space 22 from crops, soil and other dirt and consequently protects the drawbar 7 and the pin 37. As the front plate 28 extends upwardly and forwardly, a bottom face 29 of said front plate 28 can further lie down crops below the attachment assembly 5 when the tractor 1 moves forward.

Preferably, a distance 30 between the front plate 28 and the central hole 20 of the support plate 11 is greater than the maximum distance 26 between the front face 23 of the drawbar 7 and the furthest anchoring hole 27. Thanks to this distance 30 between the front plate 28 and the central hole 20 of the support plate 13, the front face 23 of the drawbar 7 does not abut against the front plate 28, especially when the drawbar 7 rotates around the pin 37, and the front plate 28 does not block the rotation of the drawbar 7.

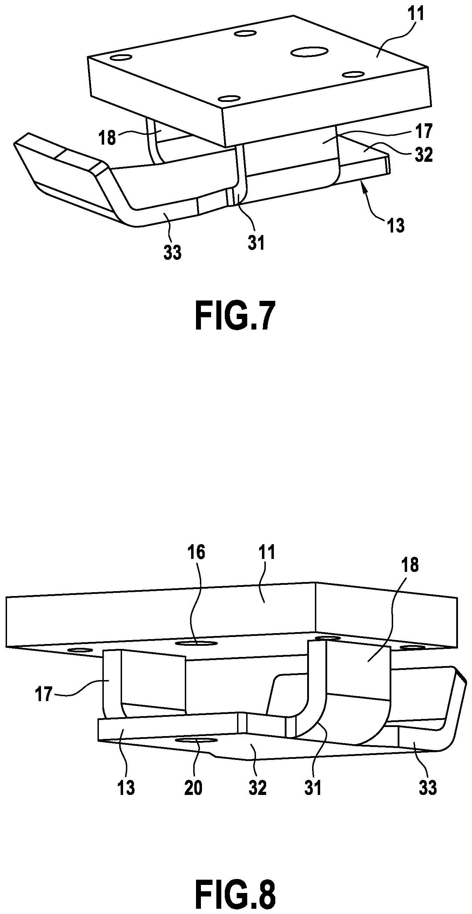

Figures 7 and 8 show a second embodiment of the attachment assembly 5 according to the invention. In these figures, the same elements or elements having the same function as elements described above in view of figures 1 to 6 have the same reference number.

This second embodiment differs from the first embodiment in that the first spacing plate 17 and the second spacing plate 18 are joined to the support plate 13 thanks to round portion 31. These round portions 31 are arranged at the end of the spacing plates 17 and 18 opposed to the mounting plate 11. Thus, the width of a main portion 32 of the support plate 13, i.e. a portion of the support plate 13 arranged along the longitudinal direction between the spacing plates 17 and 18, can be reduced compared to the first embodiment. This reduced width of the main portion 32 requires less material for manufacturing and therefore is lighter compared to the first embodiment.

However, in order to protect efficiently the drawbar 7 and the pin 37, the support plate 13 comprises a front portion 33 which is larger than the main portion 32. This front portion 33, also named enlarged portion 33, extends forwardly from the main portion 32with a greater width than the main portion 32 and forms the front end 25 of the support plate 13.

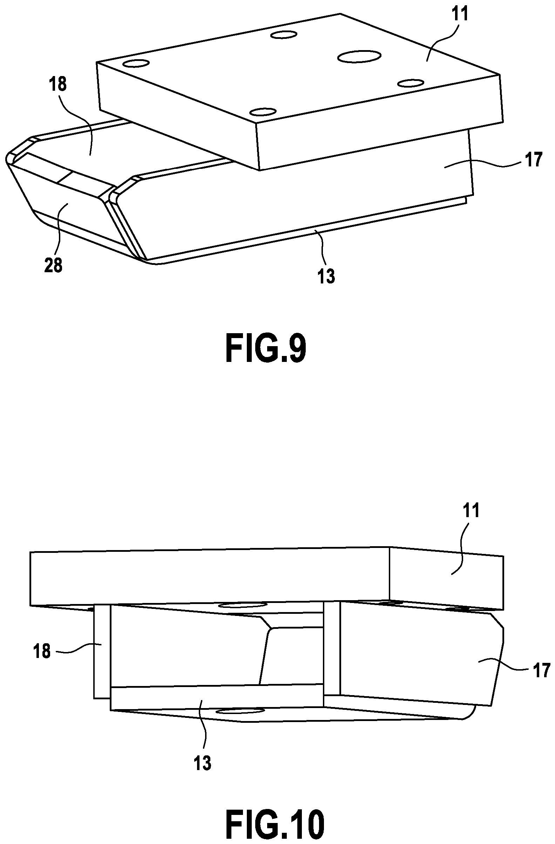

Figures 9 and 10 show a third embodiment of the attachment assembly 5 according to the invention. In these figures, the same elements or elements having the same function as elements described above in view of figures 1 to 8 have the same reference number.

In the third embodiment, the spacing plates 17 and 18 extend forwardly beyond the mounting plate 11. Especially, the spacing plates 17 and 18 extend forwardly and are joining the front plate 28. Thanks to such spacing plates 17 and 18, the receiving space 22 is fully protected in the front part of the attachment assembly 5.

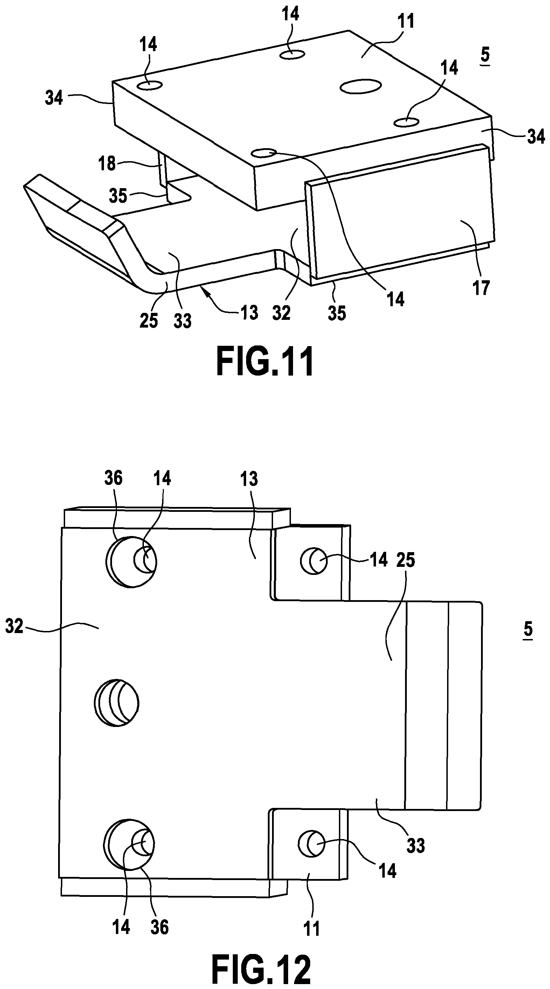

Figures 11 and 12 show a fourth embodiment of the attachment assembly 5 according to the invention. In these figures, the same elements or elements having the same function as elements described above in view of figures 1 to 10 have the same reference number.

In the fourth embodiment, the spacing plates 17 and 18 are fixed on respective lateral sides 34 of the mounting plate 11. The spacing plates 17 and 18 can be fixed thanks to any fixation means, for instance by welding. Similarly, these spacing plates 17 and 18 are fixed on respective lateral sides 35 of the support plate 13.

As the spacing plates 17 and 18 are fixed on lateral sides 34 of the mounting plate 11, the fixing holes 14 are arranged, in a width direction, between said spacing plates 17 and 18.

As shown on figure 12, the support plate 13 comprises passage holes 36 for providing an access to the two rear fixing holes 14, i.e. to let a tool pass through said passage holes 36 in order to screw nuts for fixing the mounting plate 11.

The front fixing holes 14 are arranged forwardly or the main portion 32 of the support plate 13. In this embodiment, the main portion 32 is larger than the front portion 33. The front portion 33 of the support plate 13, which extends from the main portion 32 and forms the front end 25 of the support plate 13, is arranged, in the width direction, between the front fixing holes 14 such that the support plate 13 is not aligned, in the upward direction, with the front fixing holes 14, allowing an easy access to said front fixing holes 14.

The plates described in the above embodiments have mainly a rectangular shape, however these plates could have a trapezoidal shape, a circular shape or any other shape that suits the transmission interface and defines a suitable receiving space.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. An attachment assembly (5) for attachment of a drawbar (7) to a work vehicle (1), the attachment assembly (5) comprising:
- a mounting plate (11) configured to be fixed to a bottom side (6) of the work vehicle (1),
- a spacing part (12),
- a support plate (13), the spacing part (12) joining the mounting plate (11) and the support plate (13) so as to define a receiving space (22) between the mounting plate (11) and the support plate (13) for receiving a front end (9) of the drawbar (7),
- a pin (37) arranged in the receiving space (22), said pin (37) being configured to pass through an anchoring hole (10, 27) of the front end (9) of the drawbar (7) so as to attach said front end (9) of the drawbar (7) to the attachment assembly (5) in the receiving space (22),
wherein the support plate (13) is configured to extend, along a longitudinal direction and forwardly from the pin (37), further than a distance (26) between the anchoring hole (10, 27) and a front face (23) of the drawbar (7).

2. The attachment assembly (5) according to claim 1, further comprising a front plate (28), said front plate (28) extending upwardly from a front end (25) of the support plate (13).

3. The attachment assembly (5) according to claim 1 or 2, wherein the mounting plate (11) comprises fixing holes (14), the spacing part (12) being arranged, along a width direction, between said fixing holes (14).

4. The attachment assembly (5) according to anyone of claims 1 to 3, wherein the support plate (13) comprises a main portion (32) and a front portion (33), the front portion (33) being larger than the main portion (32), said front portion (33) forming the front end (25) of the support plate (13).

5. The attachment assembly (5) according to anyone of claims 1 to 4, wherein the spacing part (12) comprises a first spacing plate (17) and a second spacing plate (18), the first spacing plate (17) joining a first side of the mounting plate (11) to a corresponding first side of the support plate (13), the second spacing plate (18) joining a second side of the mounting plate (11) to a corresponding second side of the support plate (13), the receiving space (22) being defined by the mounting plate (11), the support plate (13), the first spacing plate (17) and the second spacing plate (18).

6. The attachment assembly (5) according to claim 5, wherein the first spacing plate (17) and the second spacing plate (18) are arranged longitudinally between forward fixing holes and backward fixing hole of the mounting plate (11).

7. The attachment assembly according to claim 5 or 6, wherein at least one of the first spacing plate (17) and the second spacing plate (18) is configured to extend forwardly from the pin (37) further than the distance (26) between the anchoring hole (10, 27) and the front face (23) of the drawbar (7).

8. The attachment assembly according to anyone of claims 5 to 7, wherein a front end of at least one of the first spacing plate (17) and the second spacing plate (18) joins the front plate (28).

9. Working assembly comprising an attachment assembly (5) according to anyone of claims 1 to 8 and a drawbar (7).

10. Work vehicle comprising an attachment assembly (5) according to anyone of claims 1 to 8.
